# EUROPÄISCHE PATENTSCHRIFT

(11) **EP 2 011 601 B1**
(45) Veröffentlichungstag und Bekanntmachung des Hinweises auf die Patenterteilung: **18.06.2014**
(21) Anmeldenummer: 08004405.0
(22) Anmeldetag: 10.03.2008
(51) Int. Cl.: B23Q 3/06, B23Q 3/08

(54) **Verfahren zum Bearbeiten von Bauteilen einer Gasturbine**
Method for processing components of a gas turbine
Procédé de traitement de composants d'une turbine à gaz

(30) Priorität: 10.03.2007 DE 102007011729
(43) Veröffentlichungstag der Anmeldung: 07.01.2009
(73) Patentinhaber: MTU Aero Engines AG, 80995 München (DE)
(72) Erfinder: Bayer, Erwin, 85221 Dachau (DE); Dusel, Karl-Heinz, 85716 Unterschleissheim (DE); Huttner, Roland, 82287 Jesenwang (DE); Fessler-Knobel, Martin, 81543 München (DE)

(56) Entgegenhaltungen:
- WO-A-01/15845
- GB-A- 2 181 374
- JP-A- 6 179 195
- US-A1- 2004 055 134
- US-A1- 2005 287 329
- US-A1- 2007 048 142

## Beschreibung

Die vorliegende Erfindung betrifft ein Verfahren zur Bearbeitung von als Turbinenschaufeln ausgeführten Bauteilen einer Gasturbine. (siehe z.B. GB-A-2181374).

Zum Verbinden von Bauteilen einer Gasturbine werden üblicherweise Schweißverfahren verwendet, die eine genügend große Verbindungsfestigkeit zwischen den zu fügenden Bauteilen gewährleisten. Derartige Verfahren sind aber zeit- und kostenaufwändig. Es wurde daher auch vorgeschlagen, Klebeverbindungen zur Herstellung von Teilen einer Gasturbine zu verwenden. Nachteilig an derartigen Klebeverbindungen ist jedoch, dass die Klebung bei großen Klebespalten eine stark verminderte Festigkeit aufweist und somit insbesondere bei Teilen einer Gasturbine, die hohen thermischen und mechanischen Beanspruchungen ausgesetzt sind, häufig nicht verwendet werden können.

Bei der Bearbeitung von Bauteilen einer Gasturbine, insbesondere bei der Bearbeitung von Turbinenschaufeln wird als eines der wichtigsten Verfahren die Schleifbearbeitung eingesetzt. Das Schleifen wird dabei als formgebende Bearbeitung eingesetzt, wobei höchste Anforderungen an die Oberfläche und die Formgenauigkeit gestellt werden. Die Bearbeitung von Turbinenschaufeln kann dabei Flach-, Einstich-, Profil- sowie Bogenschleifen umfassen. Je nach Schaufeltyp können dabei bis zu 12 verschiedene Operationen pro Schaufel erforderlich sein. Zum Stabilisieren des Bauteils, insbesondere der Turbinenschaufel kommen bisher so genannte Spannvorrichtungen zum Einsatz. Eine derartige Stabilisierung der zu bearbeitenden Bauteile birgt jedoch die Gefahr in sich, dass das Bauteil beim so genannten Hartspannen beschädigt wird und dass sich seine Lage bzw. Position beim Festspannen verändert. Für die Schleifbearbeittung von Turbinenschaufeln sind pro Bearbeitungsfolge bis zu fünf unterschiedliche Maschinen im Einsatz, so dass die zu bearbeitenden Bauteile mehrfach umgespannt werden müssen. Dieser Vorgang ist nur schwer automatisierbar, so dass nur relativ geringe Produktionsraten realisierbar sind. Zudem ist beim Bauteilwechsel ein hoher Umrüstaufwand erforderlich. Des Weiteren werden Turbinenschaufeln gemäß dem Stand der Technik in einer niedrig schmelzenden Metalllegierung eingegossen und anschließend auf einem Bauteilträger aufgespannt. Nachteile sind auch hierbei eine hohe Prozessunsicherheit, eine schlechte Reproduzierbarkeit und Maßhaltigkeit sowie hohe Prozesskosten. Zudem ist eine aufwändige Reinigung der Turbinenschaufeln von Metallresten erforderlich.

Es ist daher Aufgabe der vorliegenden Erfindung ein gattungsgemäßes verfahren zur Bearbeitung von als Turbinenschaufeln ausgeführten Bauteilen einer Gasturbine, bereitzustellen, welches die Möglichkeit der Beschädigung der Bauteile minimiert, kostengünstig durchführbar ist, hohe Bearbeitungsgenauigkeiten und hohe Produktionsraten gewährleistet, sowie einen gattungsgemäßen verbundwerkstoff sowie Verwendungen des Verbundwerkstoffs bereitzustellen, welche einerseits die Möglichkeit der Beschädigung der Bauteile minimiert, kostengünstig durchführbar ist, hohe Bearbeitungsgenauigkeiten und andererseits verbindungsfestigkeiten bei einem möglichen Toleranzausgleich zwischen den Verbindungsflächen und bei großen Klebespalten gewährleistet.

Gelöst wird diese Aufgabe durch ein verfahren gemäß den Merkmalen des Anspruchs 1.

Vorteilhafte Ausgestaltungen der Erfindung sind in den jeweiligen Unteransprüchen beschrieben.

Ein erfindungsgemäßes Verfahren zur Bearbeitung von Bauteilen einer Gasturbine, insbesondere zur Bearbeitung von Turbinenschaufeln umfasst folgende Schritte: a) Bereitstellung von mindestens einem Bauteilträger mit mindestens einer Bauteilaufnahme zur lösbaren Aufnahme und Befestigung des zu bearbeitenden Bauteils, wobei die Bauteilaufnahme konturnah zu mindestens einer Kontur eines Teilbereichs des aufzunehmenden Bauteils ausgebildet ist; b) Einbringen des mindestens einen Teilbereichs des Bauteils in die Bauteilaufnahme und stoff- und/oder formschlüssiges Verbinden des Teilbereichs des Bauteils mit der Bauteilaufnahme; c) Bearbeiten des mit dem Bauteilträger verbundenen Bauteils und d) Lösen des bearbeiteten Bauteils von dem Bauteilträger. Erfindungsgemäß werden die zu bearbeitenden Bauteile durch eine stoff- und/oder formschlüssige Verbindung auf dem Bauteilträger gehalten. Das zu bearbeitende Bauteil bleibt während sämtlicher Bearbeitungs- bzw. Fertigungsschritte mit dem Bauteilträger fest verbunden. Dadurch ist es vorteilhafterweise möglich, dass ein einziger Bauteilträger für den gesamten Bearbeitungsprozess des Bauteils, insbesondere der Turbinenschaufel verwendet wird. Das Bauteil kann auf einfache Art und Weise durch mehrere Arbeitsstationen geführt werden. Das erfindungsgemäße Verfahren erlaubt einen sehr hohen Automatisierungsgrad und trägt so zu hohen Produktionsraten bei. Zudem ergeben sich hohe Bearbeitungsgenauigkeiten, da ein mehrmaliges Umspannen der zu bearbeitenden Bauteile entfällt. Zudem minimiert sich die Möglichkeit der Beschädigung des zu bearbeitenden Bauteils, da ein Einspannen der Bauteile, wie dies bei bekannten Verfahren durchgeführt wird, nicht mehr notwendig ist. Vorteilhafterweise ist zudem eine Übertragung hoher Prozesskräfte möglich. Insgesamt ergibt sich durch die Automatisierbarkeit der einzelnen Prozessschritte und die damit verbundenen kürzeren Durchlaufzeiten des zu bearbeitenden Bauteils ein kostengünstiges Verfahren zum Bearbeiten von Bauteilen einer Gasturbine.

Gemäß dem erfindungsgemäßen Verfahren erfolgt die stoffschlüssige Verbindung gemäß Verfahrensschritt b) mittels Verklebung des Teilbereichs mit der Bauteilaufnahme. Neben dem Vorteil einer sicheren Verbindung kann der Klebstoff zudem als Füllstoff zum Ausgleich von Bauteiltoleranzen an den verklebten Stellen dienen. Auch dies trägt zur Erhöhung der Bearbeitungsgenauigkeiten und dem damit verbundenen geringeren Ausschuss an Bauteilen bei. Dabei wird das zu bearbeitende Bauteil während der Bearbeitung sowohl durch Adhäsion, als auch, abhängig von der Krafteinbringung während der Bearbeitung, durch Formschluss gehalten.

Gemäß einer weiteren vorteilhaften Ausgestaltung des erfindungsgemäßen . Verfahrens kann dabei die formschlüssige Verbindung gemäß dem verfahrensschritt b) durch ein vorheriges Umgießen oder Umspritzen zumindest derjenigen Bereiche des Teilsbereichs, die in der Bauteilaufnahme aufgenommen werden und ein Einfügen dieses Teilsbereichs des Bauteils in die Bauteilaufnahme erfolgen. Diese formschlüssige Verbindung kann alternativ bzw. ergänzend zu der stoffschlüssigen Verbindung mittels Verkleben zur Anwendung kommen. Als Werkstoff für das Umgießen oder Umspritzen kann dabei eine Metall-Legierung, ein Thermoplast und/oder eine Schmelzklebstoffzusammensetzung verwendet werden. Das Umgießen oder Umspritzen kann in einer Spritzgießmaschine durchgeführt werden.

In einer weiteren vorteilhaften Ausgestaltung des erfindungsgemäßen Verfahrens erfolgt das Lösen des bearbeiteten Bauteils von dem Bauteilsträger gemäß Verfahrensschritt d) chemisch, thermisch oder mechanisch. Die Art des Löseverfahrens wird dabei durch den gewählten Werkstoff für die Verbindung des Bauteils bzw. des Teilbereichs des Bauteils mit der Bauteilaufnahme bestimmt. Verbleibende Werkstoffreste, wie zum Beispiel Klebstoffreste werden durch ein geeignetes Reinigungsverfahren abschließend entfernt.

In einer weiteren vorteilhaften Ausgestaltung des erfindungsgemäßen Verfahrens erfolgt vor dem Bearbeiten des mit dem Bauteilträger verbundenen Bauteils gemäß verfahrensschritt c) eine Bestimmung der exakten Lage und Position des Bauteils innerhalb und/oder relativ zum Bauteilträger. Die Lage- und Positionsbestimmung kann dabei optisch und/oder taktil und/oder mittels Ultraschall erfolgen. Durch die Bestimmung der Lage und Position des Bauteils zum Bauteilträger und die entsprechende Beachtung dieser bei der Bearbeitung können Bearbeitungsungenauigkeiten zusätzlich eliminiert werden. Die Lage- und Positionsinformationen können dabei bauteilspezifisch gespeichert werden, so dass jeder Bauteilträger individuell in einer entsprechenden Arbeitsstation bzw. Bearbeitungsmaschine positioniert werden kann.

In einer weiteren vorteilhaften Ausgestaltung des erfindungsgemäßen Verfahrens weist der Bauteilträger mindestens eine Identifikationsvorrichtung auf. Durch die vorteilhafte durchgängige Verwendung eines Bauteilträgers pro zu bearbeitendem Bauteil können bauteil- und fertigungsspezifische Informationen während des gesamten Fertigungsprozesses verfügbar gemacht werden. Die Identifikation der Bauteile kann dabei automatisch, zum Beispiel mittels der so genannten Radio Frequency Identification (RFID) erfolgen. Hierzu umfasst die Identifikationsvorrichtung mindestens einen RFID-Tag. Auch andere Identifikationsvorrichtungen sind denkbar. So kann als Identifikationsvorrichtung auch ein Strichcode-Etikett verwendet werden, dessen Information mittels einer entsprechenden Scanvorrichtung ausgelesen werden kann.

In einer weiteren vorteilhaften Ausgestaltung des erfindungsgemäßen Verfahrens umfasst das im Verfahrensschritt c) durchgeführte Bearbeiten des mit dem Bauteilträger verbundenen Bauteils mehrere Bearbeitungsschritte an mehreren Bearbeitungsstationen. Bei den Bearbeitungsschritten kann es sich dabei um ein Schleifen und/oder Entgraten und/oder Beschichten von zumindest einem Teilbereich des Bauteils handeln. Auch andere Bearbeitungsmethoden sind denkbar. Da hierbei immer nur ein Bauteilträger benötigt wird, führt dies vorteilhafterweise insbesondere zu einer höheren Prozesssicherheit aufgrund einer geringeren Anzahl an Prozessschritten sowie zu hohen Produktionsraten.

Weitere Vorteile, Merkmale und Einzelheiten der Erfindung ergeben sich aus der nachfolgenden Beschreibung der zeichnerisch dargestellten Ausführungsbeispiele. Dabei zeigt
- Figur 1: eine schematische Darstellung einer Vorrichtung zur Bearbeitung von Bauteilen einer Gasturbine;
- Figur 2: eine schematische Darstellung der Vorrichtung gemäß Figur 1 mit eingefügtem Bauteil;
- Figur 3: eine schematische Darstellung einer ersten Verwendung des Verbundwerkstoffs;
- Figur 4: eine weitere schematische Darstellung der ersten Verwendung des Verbundwerkstoffs gemäß Figur 3 mit eingefügtem Bauteil;
- Figur 5: eine Schnittdarstellung eines Bauteilträgers mit befestigtem Bauteil; und
- Figur 6: eine schematische Darstellung einer zweiten Verwendung des Verbundwerkstoffs.

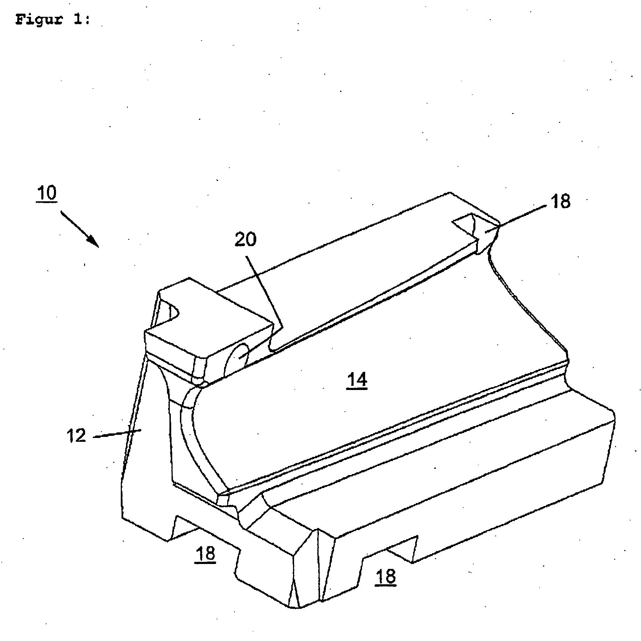

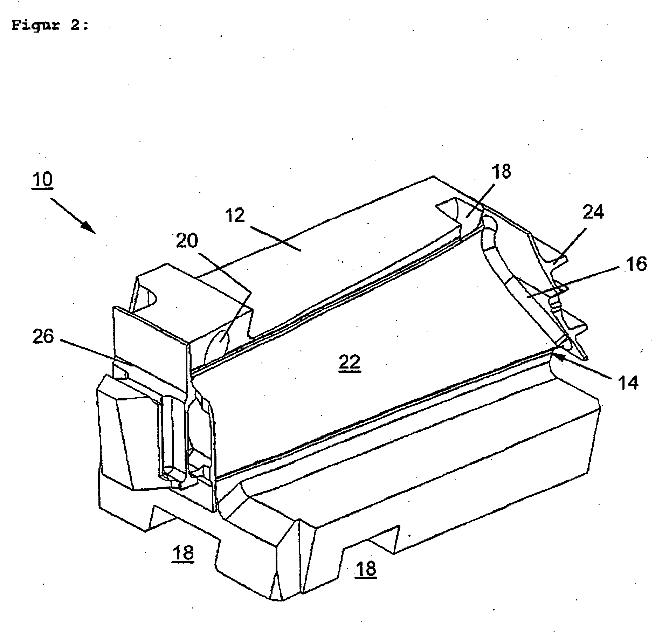

Figur 1 zeigt eine schematische Darstellung einer Vorrichtung zur Bearbeitung von Bauteilen einer Gasturbine. Die Vorrichtung umfasst dabei einen Bauteilträger 10. Der Bauteilträger 10 besteht aus einem Bauteilkörper 12 und einer in dem Bauteilkörper 12 ausgebildeten Bauteilaufnahme 14 zur lösbaren Aufnahme und Befestigung eines zu bearbeitenden Bauteils 16, nämlich einer Turbinenschaufel 16 (vergleiche Figur 2). Man erkennt, dass die Bauteilaufnahme 14 konturnah zu einer Kontur eines Teilbereichs 22 der aufzunehmenden Turbinenschaufel 16 ausgebildet ist (vergleiche ebenfalls Figur 2). Der Bauteilträger 10 weist zudem mehrere Ausnehmungen 18 im Bauteilkörper 12 auf. Die Ausnehmungen 18 dienen dabei zum Eingriff einer entsprechenden Transportvorrichtung zur Beförderung des Bauteilträgers 10 zu den verschiedenen Bearbeitungsstationen sowie zur Lagepositionierung und Lagekorrektur des Bauteilträgers 10. Des Weiteren ist ein Eingriff 20 ausgebildet, der ein Lösen der Turbinenschaufel 16 von dem Bauteilträger 10 erleichtert.

Figur 2 zeigt eine schematische Darstellung des Bauteilträgers 10 der Vorrichtung mit eingefügtem Bauteil 16, nämlich einer Turbinenschaufel 16. Bei der Turbinenschaufel 16 handelt es sich dabei um eine so genannte Leitschaufel. Man erkennt, dass die Turbinenschaufel aus einem Schaufelblatt bzw. Teilbereich 22 sowie einem äußeren Deckband 24 und einem inneren Deckband 26 besteht, wobei die Deckbänder 24, 26 an den jeweiligen Enden des Schaufelblatts 22 angefügt sind. Die Figur 2 zeigt deutlich, dass das Schaufelblatt 22 als Teilbereich der Turbinenschaufel 16 in die Kontur der Bauteilaufnahme 14 eingefügt und eine stoff- und/oder formschlüssige Verbindung mit dieser eingeht. Die Verbindung erfolgt dabei gemäß dem Ausführungsbeispiel durch ein verkleben des Schaufelblatts 22 mit der Bauteilaufnahme 14. Der Klebstoff kann dabei zusätzlich als Füllstoff zum Ausgleich von Bauteiltoleranzen an den verklebten Stellen dienen. Die Turbinenschaufel 16 wird während der Bearbeitung sowohl durch Adhäsion, als auch, abhängig von der Krafteinbringung während der Bearbeitung, durch Formschluss gehalten. Die Klebeverbindung wird nach der Bearbeitung der Turbinenschaufel 16 mechanisch, chemisch oder thermisch gelöst. Klebstoffreste werden durch geeignete Reinigungsverfahren entfernt. Des Weiteren erkennt man, dass durch die dargestellte Halterung der Turbinenschaufel 16 bzw. des Schaufelblatts 22 in dem Bauteilträger 10 eine Übertragung hoher Prozesskräfte möglich ist, ohne dass die Turbinenschaufel 16 oder Teilbereiche davon beschädigt werden.

Durch das vorstehende Ausführungsbeispiel wird deutlich, dass das erfindungsgemäße Verfahren wie auch der Bauteilträger 10 sowohl für die Herstellung wie auch die Reparatur von Bauteilen einer Gasturbine geeignet ist.

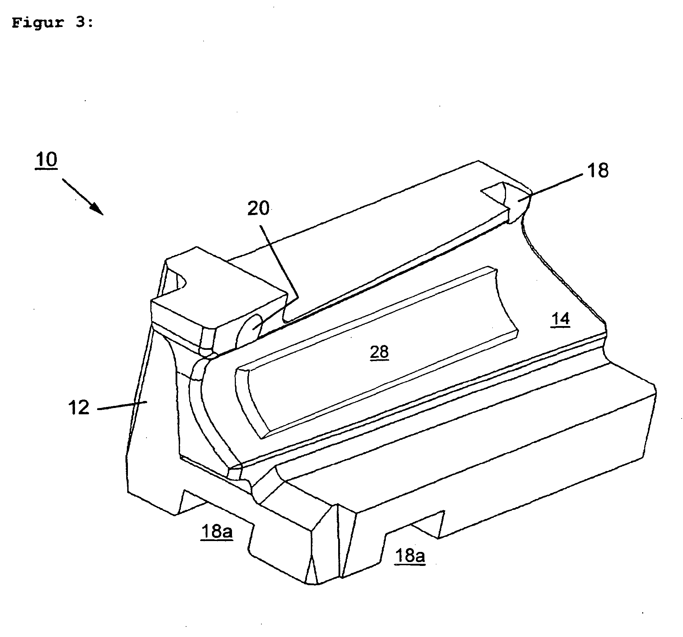

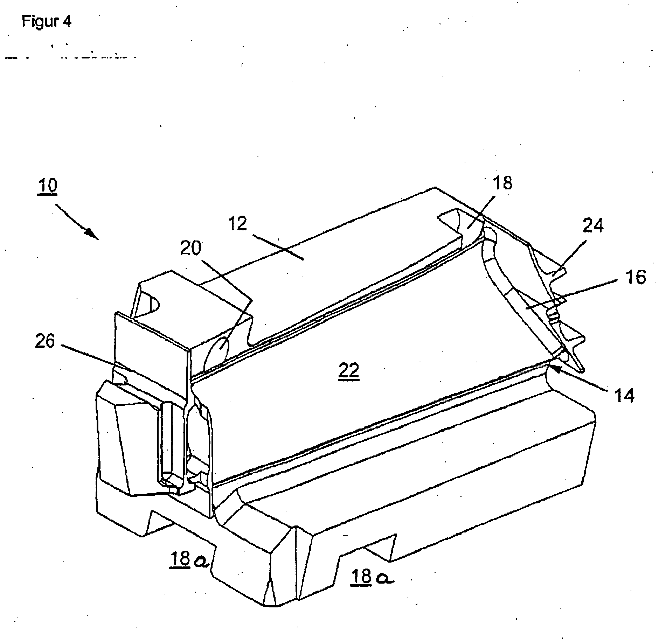

Figur 3 zeigt eine schematische Darstellung einer Vorrichtung zur Bearbeitung von Bauteilen einer Gasturbine. Die Vorrichtung umfasst dabei einen Bauteilträger 10. Der Bauteilträger 10 besteht aus einem Bauteilkörper 12 und einer in dem Bauteilkörper 12 ausgebildeten Bauteilaufnahme 14 zur lösbaren Aufnahme und Befestigung eines zu bearbeitenden Bauteils 16, nämlich einer Turbinenschaufel 16 (vergleiche Figur 4). Man erkennt, dass die Bauteilaufnahme 14 konturnah zu einer Kontur eines Teilbereichs 22 der aufzunehmenden Turbinenschaufel 16 ausgebildet ist (vergleiche ebenfalls Figur 4). Der Bauteilträger 10 weist zudem mehrere Ausnehmungen 18, 18a im Bauteilkörper 12 auf. Die Ausnehmungen 18, 20 dienen dabei für ein Anlagesystem der Schaufel beim Fügen der Schaufel 16 auf den Bauteilträger 10. Die Ausnehmungen 18a sind für bzw. als Bestandteil eines Spannsystems vorgesehen, dass zum Spannen des Bauteilträgers 10 (z.B. beim Messen und / oder bei der Bearbeitung und / oder beim Fügen) dient.

Man erkennt zudem, dass in einem Teilbereich der Bauteilaufnahme 14 ein streifenartiger Verbundwerkstoff 28 aufgebracht ist. Der Verbundwerkstoff 28 besteht dabei aus einem gewebten oder nicht-gewebten Fasermaterial 30 und einem Klebstoff, einem Klebstoffträger oder einzelnen Klebstoffkomponenten, wobei der Klebstoff, der Klebstoffträger oder die Klebstoffkomponenten das Fasermaterial 30 zumindest teilweise umgeben. Das Fasermaterial 30 kann dabei als eine Gewebematte, ein Vlies oder ein Geflecht ausbildet sein. In dem dargestellten Ausführungsbeispiel besteht das Fasermaterial 30 aus Stahlwolle. Das Aushärten des Verbundwerkstoffs 28 erfolgt chemisch, thermisch oder mechanisch durch Druckausübung.

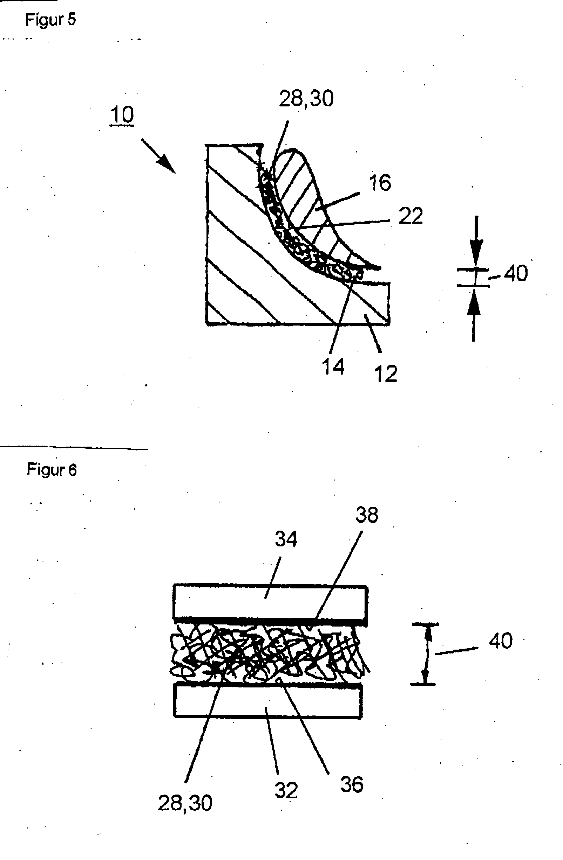

Figur 4 zeigt eine schematische Darstellung des Bauteilträgers 10 der Vorrichtung mit eingefügtem Bauteil 16, nämlich einer Turbinenschaufel 16. Bei der Turbinenschaufel 16 handelt es sich dabei um eine so genannte Laufschaufel. Man erkennt, dass die Turbinenschaufel aus einem Schaufelblatt bzw. Teilbereich 22 sowie einem äußeren Deckband 24 und einem inneren Deckband 26 besteht, wobei die Deckbänder 24, 26 an den jeweiligen Enden des Schaufelblatts 22 angefügt sind. Die Figur 4 zeigt deutlich, dass das Schaufelblatt 22 als Teilbereich der Turbinenschaufel 16 in die Kontur der Bauteilaufnahme 14 eingefügt und eine stoff- und/oder formschlüssige Verbindung mittels des Verbundwerkstoffs 28 mit dieser eingeht. Der Verbundwerkstoff 28 kann dabei zusätzlich als Füllstoff zum Ausgleich von Bauteiltoleranzen und zur Überbrückung größerer Klebespalte 40 (siehe auch Figur 5) an den verklebten Stellen dienen. Die Turbinenschaufel 16 wird während der Bearbeitung sowohl durch Adhäsion, als auch, abhängig von der Krafteinbringung während der Bearbeitung, durch Formschluss gehalten. Die Klebeverbindung mittels des Verbundwerkstoffs 28 wird nach der Bearbeitung der Turbinenschaufel 16 mechanisch, chemisch oder thermisch gelöst. Des Weiteren erkennt man, dass durch die dargestellte Halterung der Turbinenschaufel 16 bzw. des Schaufelblatts 22 in dem Bauteilträger 10 eine Übertragung hoher Prozesskräfte möglich ist, ohne dass die Turbinenschaufel 16 oder Teilbereiche davon beschädigt werden.

Durch das Ausführungsbeispiel wird deutlich, dass die erfindungsgemäße Verwendung wie auch der Bauteilträger 10 sowohl für die Herstellung wie auch die Reparatur von Bauteilen einer Gasturbine geeignet ist.

Figur 5 zeigt eine Schnittdarstellung des Bauteilträgers 10 mit der daran befestigten Turbinenschaufel 16. Man erkennt, dass der Verbundwerkstoff auf die Bauteilaufnahme 14 aufgetragen ist und an seiner gegenüberliegenden Oberfläche mit dem Teilbereich 22 der Turbinenschaufel 16 in Kontakt steht. Des Weiteren erkennt man, dass der Verbundwerkstoff 28 mit dem Fasermaterial 30 den kompletten Klebespalt 40 ausfüllt und somit einen entsprechenden Toleranzausgleich zwischen der Bauteilaufnahme 14 und dem Teilbereich 22 der Turbinenschaufel 16 ermöglicht.

Figur 6 zeigt eine schematische Darstellung einer zweiten Verwendung des Verbundwerkstoffs 28, nämlich eine Verbindung eines ersten Bauteils 32 mit einem zweiten Bauteil 34. Bei den Bauteilen 32, 34 handelt es sich um Bauteile einer Gasturbine. Man erkennt, dass der Verbundwerkstoff 28 mit dem Fasermaterial 30 den kompletten Klebespalt 40 zwischen einer ersten verbindungsfläche 36 des ersten Bauteils 32 und der zweiten Verbindungsfläche 38 des zweiten Bauteils 34 ausfüllt und so wiederum einen Toleranzausgleich zwischen den beiden Bauteilen 32, 34 bzw. den verbindungsflächen 36, 38 ermöglicht. Zudem vergrößert die Ausfüllung des Klebespalts 40 die Klebefestigkeit zwischen dem ersten und dem zweiten Bauteil 32, 34.

### Bezugszeichen

- 10: Bauteilträger
- 12: Bauteilkörper von 10
- 14: Bauteilaufnahme in 12
- 16: zu bearbeitendes Bauteils, Turbinenschaufel
- 18: Ausnehmungen in 10
- 18a: Ausnehmungen in 10
- 20: Eingriff
- 22: Teilbereich bzw. Schaufelblatt von 16
- 24: äußeres Deckband von 16
- 26: inneres Deckband von 16
- 28: Verbundwerkstoff
- 30: gewebtes oder nicht-gewebtes Fasermaterial von 28
- 32: erstes Bauteil
- 34: zweites Bauteil
- 36: erste Verbindungsfläche von 32
- 38: zweite Verbindungsfläche von 34
- 40: Klebespalt zwischen 36 und 38

## Patentansprüche

1. Verfahren zur Bearbeitung von als Turbinenschaufeln ausgeführten Bäuteilen einer Gasturbine, wobei das Verfahren folgende Schritte umfasst:
a) Bereitstellung von mindestens einem Bauteilträger (10) mit mindestens einer Bauteilaufnahme (14) zur lösbaren Aufnahme und Befestigung des zu bearbeitenden Bauteils (16), wobei die Bauteilaufnahme (14) konturnah zu einer räumlich gekrümmten Kontur eines das Schaufslblatt bildenden Teilbereichs (22) des aufzunehmenden Bauteils (16) ausgebildet ist;
b) Aufbringen des Teilbereichs (22) des Bauteils (16) auf die Bauteilaufnahme (14) des Bauteilträgers (10) und Verbinden des Teilbereichs (22) des Bauteils (16) mit der Bauteilaufnahme (14), wobei die Verbindung mittels Verklebung des Teilbereichs (22) mit der Bauteilaufnahme (14) mit einem Klebstoff derart erfolgt, dass eine dem Teilbereich (22) gegenüberliegende Fläche des Bauteils (16) frei bleibt;
c) Bearbeiten des mit dem sauteiltrager (10) verbunden Bauteils (16); und
d) Lösen des bearbeiteten Bauteils (16) von dem Bauteilträger (10).

2. Verfahren nach Anspruch 1, **dadurch gekennzeichnet, dass** die stoffschlüssige Verbindung gemäß Verfahrensschritt b) durch ein vorheriges Umgießen oder Umspritzen zumindest derjenigen Bereiche des Teilbereichs (22), die in der Bauteilaufnahme (14) aufgenommen werden und ein Einfügen dieses Teilbereichs (22) des Bauteils (16) in die Bauteilaufnahme (14) erfolgt.

3. Verfahren nach Anspruch 2, **dadurch gekennzeichnet, dass** der Werkstoff für das Umgießen oder Umspritzen eine Metall-Legierung, ein Thermoplast und/oder eine Schmelzklnhntöffzunammensetzung ist.

4. verfahren nach einem der vorhergehenden Ansprüche, **dadurch gekennzeichnet, dass** das Lösen des bearbeiteten Bauteils (16) von dem Bauteilträger (10) gemäß Verfahrensschritt d) chemisch, thermisch oder mechanisch erfolgt.

5. Verfahren nach einem der vorhergehenden Ansprüche, **dadurch gekennzeichnet, dass** vor dem Verfahrensschritt c) eine Bestimmung der exakten Lage und Position des Bauteils (16) innerhalb und/oder relativ zum Bauteilträger (10) erfolgt.

6. Verfahren nach Anspruch 5, **dadurch gekennzeichnet, dass** die Lage- und Positionsbestimmung optisch und/oder taktil und/oder mittels Ultraschall erfolgt.

7. Verfahren nach einem der vorhergehenden Ansprüche, **dadurch gekennzeichnet, dass** der nauteiltreger (10) mindestens eine Identifikationsvorrichtung aufweist.

8. Verfahren nach Anspruch 7, **dadurch gekennzeichnet, dass** die Identifikationsvorrichtung mindestens einen RFID-Tag umfasst.

9. Verfahren nach einem der vorhergehenden Ansprüche, **dadurch gekennzeichnet, dass** das im Verfahrensschritt c) durchgeführte Bearbeiten des mit dem Bauteilträger (10) verbunden Bauteils (16) mehrere Bearbeitungsschritte an mehreren Bearbeitungsstationen umfasst.

10. Verfahren nach einem der vorhergehenden Ansprüche, **dadurch gekennzeichnet, dass** im Verfahrensschritt c) ein Schleifen und/oder Entgraten und/oder Beschichten von zumindest einem Teilbereich des Bauteils (16) erfolgt.

11. Verfahren nach einem der vorhergehenden Ansprüche, **dadurch gekennzeichnet, dass** die Verklebung mittels eines Verbundwerkstoffs (28) erfolgt, der auf die Bauteilaufnahme (14) aufgebracht wird.

12. Verfahren nach Anspruch 11, **dadurch gekennzeichnet, dass** der Verbundwerkstoff (28) ein gewebtes oder nicht-gewebtes Fasermaterial (30) und einen Klebstoff, einen Klebstoffträger oder einzelne Klebstoffkomponenten umfasst, wobei der Klebstoff, der Klebstoffträger oder die Klebstoffkomponenten das Fasermaterial (30) zumindest teilweise ungeben.

13. Verfahren nach Anspruch 12, **dadurch gekennzeichnet, dass** als Fasermaterial (30) eine Gewebematte, ein Vlies oder ein Geflecht verwendet wird.

14. Verfahren nach Anspruch 12 oder 13, **dadurch gekennzeichnet, dass** das Fasermaterial (30) band- oder streifenartig ausgebildet wird.

15. Verfahren nach einem der Ansprüche 11 bis 14, **dadurch gekennzeichnet, dass** als Verbundwerkstoffs (28) ein Metall, eine Metall-Legierung, Stahl, Kunststoff, Papier, Watte oder ein Gemisch davon verwendet wird.

16. Verfahren nach einem der Ansprüche 11 bis 15, **dadurch gekennzeichnet, dass** der Verbundwerkstoff (28) derart ausgebildet wird, dass der Klebstoffträger den Klebstoff bei Kompression des Fasermaterials (30) freigibt.

17. Verfahren nach einem der Ansprüche 11 bis 16, **dadurch gekennzeichnet, dass** der Verbundwerkstoff (28) derart ausgebildet wird, dass die Klebstoffkomponenten bei Kompression des Fasermaterials (30) freigegeben werden und eine Klebewirkung entfalten.

## Claims

1. Method to process components of a gas turbine implemented as turbine blades, wherein the method comprises the following steps:
a) provision of at least one component carrier (10) having at least one component receiver (14) for the releasable receiving and fixing of the component (16) to be processed, wherein the component receiver (14) is formed close to a spatially curved contour of a partial region (22) of the component (16) to be received said partial region (22) forming the blade;
b) application of the partial region (22) of the component (16) onto the component receiver (14) of the component carrier (10) and connection of the partial region (22) of the component (16) to the component receiver (14), wherein the connection occurs by means of adhering the partial region (22) to the component receiver (14) with an adhesive in such a way that a surface of the component (16) lying opposite the partial region (22) remains free;
c) processing of the component (16) connected to the component carrier (10); and
d) release of the processed component (16) from the component carrier (10).

2. Method according to claim 1, **characterised in that** the firm bond according to method step b) occurs by a prior casting or insert moulding of at least those regions of the partial region (22) which are received in the component receiver (14), and an insertion of this partial region (22) of the component (16) into the component receiver (14).

3. Method according to claim 2, **characterised in that** the material for the casting or insert moulding is a metal alloy, a thermoplastic and/or a hot-melt adhesive composition.

4. Method according to one of the preceding claims, **characterised in that** the release of the processed component (16) from the component carrier (10) according to method step d) occurs chemically, thermally or mechanically.

5. Method according to one of the preceding claims, **characterised in that** before method step c), a determination of the exact location and position of the component (16) within and/or relative to the component carrier (10) occurs.

6. Method according to claim 5, **characterised in that** the location and position determination occurs optically and/or tactilely and/or by means of ultrasound.

7. Method according to one of the preceding claims, **characterised in that** the component carrier (10) has at least one identification device.

8. Method according to claim 7, **characterised in that** the identification device comprises at least one RFID tag.

9. Method according to one of the preceding claims, **characterised in that** the processing of the component (16) connected to the component carrier (10) carried out in method step c) comprises several processing steps at several work stations.

10. Method according to one of the preceding claims,
**characterised in that** in method step c), a grinding and/or deburring and/or coating of at least one partial region of the component (16) occurs.

11. Method according to one of the preceding claims,
**characterised in that** the adhesion occurs by means of a composite material (28) which is applied to the component receiver (14).

12. Method according to claim 11, **characterised in that** the
composite material (28) comprises a woven or non-woven fibrous material (30) and an adhesive, an adhesive carrier or individual adhesive components, wherein the adhesive, the adhesive carrier or the adhesive components at least partially surround the fibrous material (30).

13. Method according to claim 12, **characterised in that** a
woven mat, a fleece or a mesh is used as the fibrous maternal (30).

14. Method according to claim 12 or 13, **characterised in that**
the fibrous material (30) is formed in the form of bands or strips.

15. Method according to one of claims 11 to 14, **characterised**
**in that** a metal, a metal alloy, steel, plastic, paper, cotton wool or a mixture thereof is used as a composite material (28).

16. Method according to one of claims 11 to 15, **characterised**
**in that** the composite material (28) is formed in such a way that the adhesive carrier releases the adhesive on compression of the fibrous material (30).

17. Method according to one of claims 11 to 16, **characterised**
**in that** the composite material (28) is formed in such a way that the adhesive components are released on compression of the fibrous material (30) and develop an adhesive effect.

## Revendications

1. Procédé de traitement de composants d'une turbine à gaz réalisés en forme d'aubes de turbine, dans lequel le procédé comprend les étapes suivantes :
a) préparation d'au moins un support de composant (10) avec au moins un logement de composant (14) pour la mise en place amovible et la fixation du composant à traiter (16), dans lequel le logement de composant (14) est configuré avec un contour proche d'un contour spatialement courbe d'une zone partielle (22) du composant à monter (16), qui forme la pale ;
b) mise en place de la zone partielle (22) du composant (16) sur le logement de composant (14) du support de composant (10) et assemblage de la zone partielle (22) du composant (16) avec le logement de composant (14), dans lequel l'assemblage est effectué par collage de la zone partielle (22) au logement de composant (14) avec une colle, de telle manière qu'une face du composant (16), opposée à la zone partielle (22), reste libre ;
c) traitement du composant (16) assemblé au support de composant (10) ; et
d) enlèvement du composant traité (16) hors du support de composant (10).

2. Procédé selon la revendication 1, **caractérisé en ce que** l'on effectue l'assemblage matériel selon l'étape b) par un enrobage ou une pulvérisation préalable au moins des régions de la zone partielle (22), qui sont logées dans le logement de composant (14) et une insertion de cette zone partielle (22) du composant (16) dans le logement de composant (14).

3. Procédé selon la revendication 2, **caractérisé en ce que** le matériau destiné à l'enrobage ou à la pulvérisation est un alliage métallique, un thermoplastique et/ou une composition de colle fusible.

4. Procédé selon l'une quelconque des revendications précédentes, **caractérisé en ce que** l'on effectue l'enlèvement du composant traité (16) hors du support de composant (10) selon l'étape d) par voie chimique, thermique ou mécanique.

5. Procédé selon l'une quelconque des revendications précédentes, **caractérisé en ce que**, avant l'étape c), on effectue une détermination de la situation et de la position exactes du composant (16) à l'intérieur du et/ou par rapport au support de composant (10).

6. Procédé selon la revendication 5, **caractérisé en ce que** l'on effectue la détermination de la situation et de la position par voie optique et/ou tactile et/ou au moyen d'ultrasons.

7. Procédé selon l'une quelconque des revendications précédentes, **caractérisé en ce que** le support de composant (10) présente au moins un dispositif d'identification.

8. Procédé selon la revendication 7, **caractérisé en ce que** le dispositif d'identification comprend au moins une étiquette RFID.

9. Procédé selon l'une quelconque des revendications précédentes, **caractérisé en ce que** le traitement du composant (16) assemblé avec le support de composant (10), effectué dans l'étape c), comprend plusieurs étapes de traitement dans plusieurs stations de traitement.

10. Procédé selon l'une quelconque des revendications précédentes, **caractérisé en ce que** l'on effectue dans l'étape c) un meulage et/ou un ébavurage et/ou un revêtement d'au moins une zone partielle du composant (16).

11. Procédé selon l'une quelconque des revendications précédentes, **caractérisé en ce que** l'on effectue le collage au moyen d'un matériau composite (28), que l'on applique sur le logement de composant (14).

12. Procédé selon la revendication 11, **caractérisé en ce que** le matériau composite (28) comprend un matériau de fibres (30) tissé ou non-tissé et une colle, un porteur de colle ou des composants de colle individuels, dans lequel la colle, le porteur de colle ou les composants de colle enrobent au moins partiellement le matériau de fibres (30).

13. Procédé selon la revendication 12, **caractérisé en ce que** l'on utilise comme matériau de fibres (30) un tapis tissé, un non-tissé ou un treillis.

14. Procédé selon la revendication 12 ou 13, **caractérisé en ce que** le matériau de fibres (30) est réalisé en forme de bande ou de ruban.

15. Procédé selon l'une quelconque des revendications 11 à 14, **caractérisé en ce que** l'on utilise comme matériau composite (28) un métal, un alliage métallique, un acier, une matière plastique, du papier, de l'ouate ou un mélange de ceux-ci.

16. Procédé selon l'une quelconque des revendications 11 à 15, **caractérisé en ce que** le matériau composite (28) est réalisé de telle manière que le porteur de colle libère la colle lors de la compression du matériau de fibres (30).

17. Procédé selon l'une quelconque des revendications 11 à 16, **caractérisé en ce que** le matériau composite (28) est réalisé de telle manière que les composants de colle soient libérés lors de la compression du matériau de fibres (30) et déploient une action de collage.
